# Europäisches Patentamt
# European Patent Office
# Office européen des brevets

(19)

(11) Publication number: **0 012 256**
**B1**

(12)

# EUROPEAN PATENT SPECIFICATION

(45) Date of publication of patent specification: **13.04.83**

(51) Int. Cl.³: **C 02 F 1/06, B 01 D 3/06**

(21) Application number: **79104660.0**

(22) Date of filing: **23.11.79**

(54) Multi-stage flash evaporator.

(30) Priority: **08.12.78 US 967822**

(43) Date of publication of application:
**25.06.80 Bulletin 80/13**

(45) Publication of the grant of the patent:
**13.04.83 Bulletin 83/15**

(84) Designated Contracting States:
**DE FR GB IT NL**

(56) References cited:
**DE - A - 2 542 146**
**GB - A - 1 018 174**
**GB - A - 1 105 532**

(73) Proprietor: **WESTINGHOUSE ELECTRIC CORPORATION**
**Westinghouse Building Gateway Center**
**Pittsburgh Pennsylvania 15222 (US)**

(72) Inventor: **Bailie, Robert Edward**
**P.O. Box 14696**
**Ft. Lauderdale, Florida (US)**

(74) Representative: **Holzer, Rupprecht, Dipl.-Ing.**
**Philippine-Welser-Strasse 14**
**D-8900 Augsburg (DE)**

Courier Press, Leamington Spa, England

Multi-stage flash evaporator

This invention relates to a multi-stage flash evaporator as used in the desalting of seawater.

Within the field of seawater desalting, there are two basic design configurations which have been successfully and widely applied to the design of multi-stage flash evaporators since the advent of the MSF evaporator system in the 1950's. These design configurations are commonly referred to within the field as "cross-tube" ("cross-flow") and "long-tube" ("long-flow") design. This designation is derived from the orientation of the condenser tubing in relation to the direction of flow of the flashing brine stream as it progresses from evaporator stage to evaporator stage beneath the condenser tubing.

One of the primary advantages of the "cross-tube" configuration lies in its ability to operate with relatively low thermal losses at extremely low mass flow rates of the brine flowing from stage to stage. These low mass flow rates yield lower brine levels and permit the use of flash devices and flash enhancers which can significantly increase the brine/vapor interface areas resulting in more efficient flashing and reduced non-equilibrium losses. This in turn reduces the required heat transfer surface area for each stage of the condenser. In addition, the "cross-tube" configuration permits the passage of brine from stage to stage under very low pressure differential between stages without incurring high or unstable brine levels within the upstream stage, and thus permits the use of a greater number of stages within a fixed temperature differential. Vapor flashed within the "cross-tube" stage can flow in a uniform manner through the mesh entrainment separator to the full length of the condenser tubes within the tube bundle.

The primary disadvantage of the "cross-tube" multi-stage flash evaporator design configuration resides in its initial cost in that each stage of the unit comprises essentially an individual condenser with an inlet and an outlet tube sheet, attendant tube joints, and inlet and outlet water boxes which must be interconnected to each adjacent stage of the unit.

With respect to the "long-tube" design configuration, field experience in recent years has shown that the high mass flow rates which are common to this configuration often results in abnormally high brine levels and high thermal losses, particularly within the high temperature stages, and excessive erosion/corrosion by the flashing brine stream. Each stage of the "long-tube" configuration contains highly irregular or non-uniform vapor flow patterns as the flash vapor at the entrance flows toward the cooler end of the condenser. Another major disadvantage of the "long-tube" design configuration which is now beginning to be more prevalent among those evaporators installed in the 1960's is that when there is a condenser tube failure the distillate (product water) from a series of stages is contaminated. Frequently the evaporator is forced off-the-line for location and plugging of the failed tube. However, in a tube failure within a "cross-tube" design, the distillate in each stage can be readily sampled and tested to rapidly determine the source of the leak and once the source is located the contaminated distillate can be diverted in such a manner as to permit the remaining stages to maintain high quality distillate production until it is convenient to initiate a shutdown of the unit for tube plugging.

The primary advantage of the "long-tube" design configuration is its minimal cost by way of minimizing the number of tube sheets, tube joints and water boxes to two per condenser tube pass (which may serve eight or more stages). This permits the use of relatively less expensive heat exchanger surface area with very long condenser tubes.

It is therefore the principal object of the present invention to provide a "cross-tube" flash evaporator which is reasonably inexpensive, that is a flash evaporator which, to a large extent, has the advantages of both, the "long tube" and the "cross tube" structure.

With this object in view, the present invention resides in a multi-stage flash evaporator for evaporating a solvent from a solution, comprising an elongated housing with side walls and divided by divider walls into a plurality of evaporation stages maintained, during operation of said evaporator at successively decreasing pressures, means for admitting said solution to the highest pressure evaporation stage and for directing said solution through said evaporation stages to the lowest pressure evaporation stage thereby causing staged partial evaporation of said solvent, and condenser means associated with said evaporation stages for condensing the solvent evaporated from said solution in the various evaporation stages, characterized in that each said condenser means extends between the side walls and is partially arranged in the upper portion of, and between, two adjacent evaporation stages, each said condenser means being divided by a partition into two chambers, one chamber being in communication with one and the other chamber being in communication with the other of said two adjacent evaporation stages and that condenser tubes extend between the side walls of said housing and serially through the two chambers and said partition in a direction generally parallel to said divider walls.

Such configuration significantly reduces the number of end plates and seals of the cross-flow design and since the condenser structure is still relatively short and can be easily handled and pre-assembled, it is generally competitive in price with the long-tube design, but retains the technical advantages of the cross-flow design. The invention will become more readily apparent from the following description of a preferred embodiment thereof shown, by way of example only, in the accompanying drawings, in which:

Figure 1 is an isometric schematic of one unit typical of the multi-stage flash evaporator of the present invention with portions broken away to show the internal partitions defining the tandem evaporator stages and the separate condenser chambers;

Figure 2 is a cross-sectional schematic through the unit at the high temperature (i.e. upstream) stage condenser;

Figure 3 is a view similar to Figure 2 through the unit at the lower temperature (i.e. downstream) stage condenser; and

Figure 4 is a top plan view of the unit.

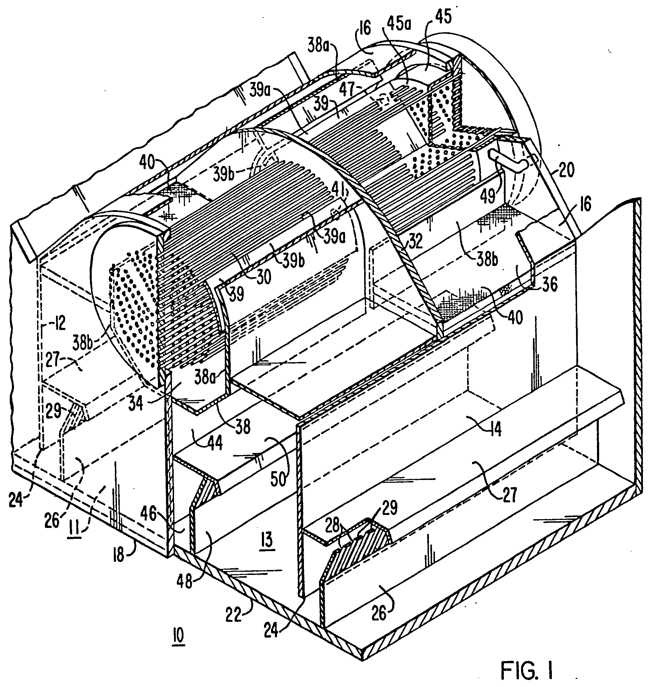

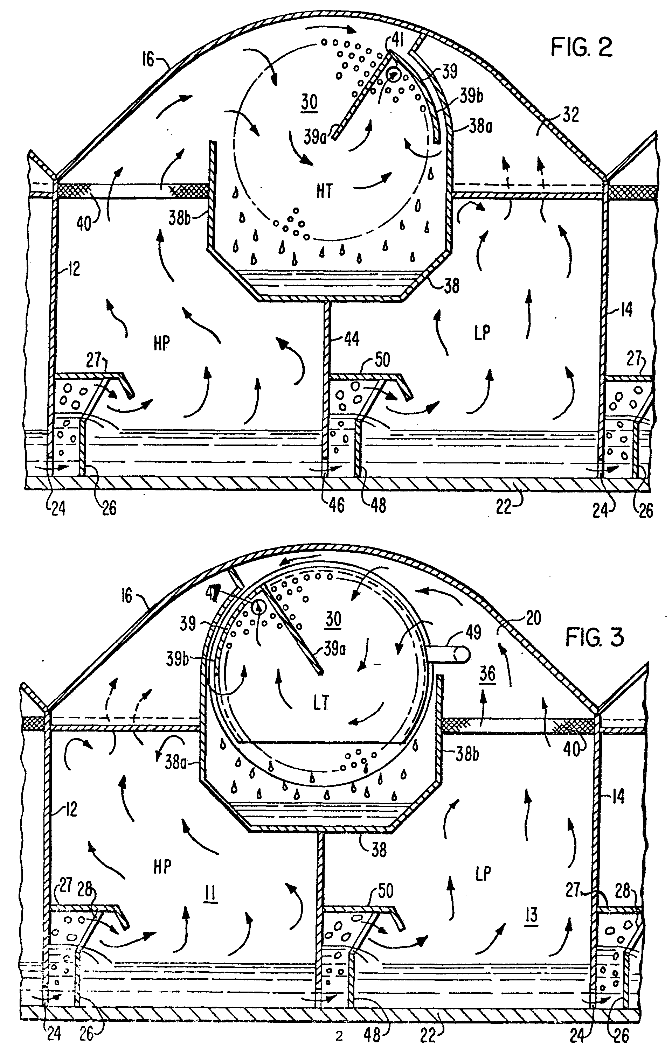

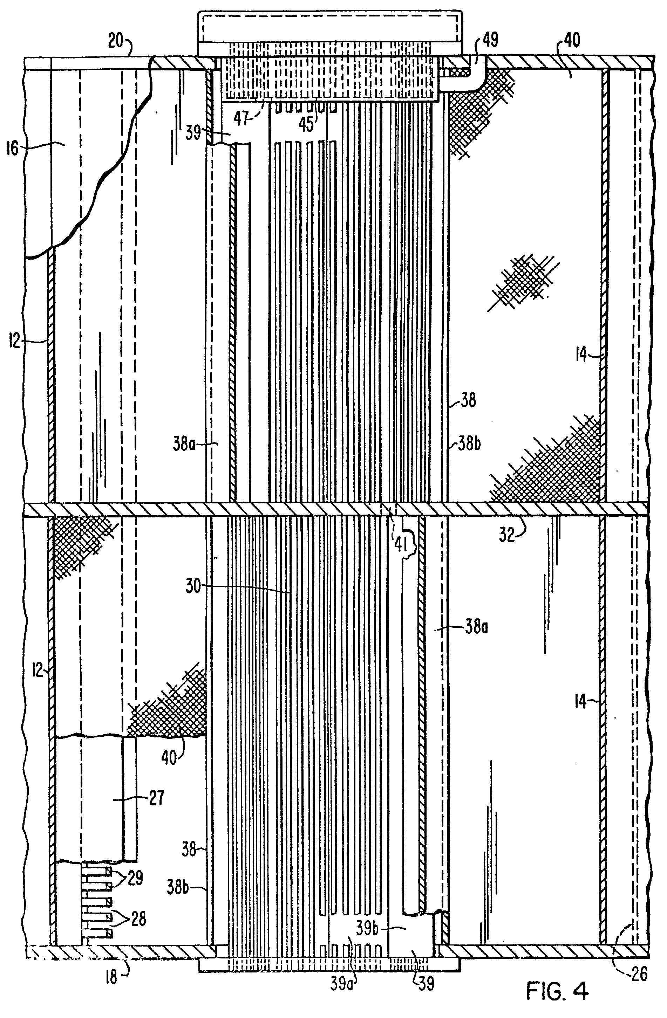

As shown in Figures 1—4, two adjacent flash evaporator chambers form a unit 10 of a multi-stage flash evaporator. It is to be understood that any number of such paired chamber units could be used to obtain the desired thermal efficiency and output capacity and that the invention is described for one such unit.

Each paired chamber unit 10 comprises a housing structure defining the individual flash evaporator stages 11 and 13. (Evaporator stage 11 is the high temperature, high pressure stage of the two, whereas stage 13 is at a lower temperature and pressure.) Thus, as is seen, this structure includes an upstream wall 12 and a downstream wall 14 each extending the full width of the respective evaporator stages. A domed roof or top member 16 extends between the walls 12 and 14 and the two opposed ends are closed by end walls 18 and 20. A planar bottom member 22 (which continues as the bottom for the next adjacent modular unit) completes the structure to define a substantially rectangular enclosure having an arcuate top.

The walls 12 and 14 terminate a distance above the bottom 22 to define a brine feed opening 24 which also extends the full length of the housing and a dam member 26 projects upwardly from the bottom just downstream of the opening 24 to cause the brine to cascade thereover and increase exposure for vaporization thereof. A row of forwardly slanted, upwardly projecting struts 29 defining generally vertically extending spaces 28 therebetween are positioned on top of dam member 26 to provide a plurality of separate brine inlets. A horizontal shelf 27 projects forwardly into each chamber from each wall just above the dam member 26 and supports the top end of the struts 29 and extends slightly over the dam member to prevent brine droplets from being entrained in the upward vapor flow.

A single condenser tube bundle 30 extends across the width of the enclosure in the upper space subadjacent the domed top member 16. An upper stage divider or dividing wall 32 is disposed intermediate the two opposed ends 18, 20 to divide the upper domed portion of the unit 10 into two separate chambers 34, 36 with the tube bundle 30 passing through the dividing wall (i.e. each individual tube of the bundle is received in sealed engagement in individual openings in the wall 32) in a manner that generally maintains one chamber sealed from the other therethrough. It is to be understood that the opposite ends of the tubes are received in the tubesheets which are secured to the external side of the opposed walls and having attached thereto a hot water box adjacent end wall 18 and a cold water box adjacent end wall 20 to supply the water to the condenser tubes in a manner, although not shown, well known in the art.

A generally U-shaped distillate trough 38 is disposed subadjacent the condenser tube bundle 30 and extends generally from each end wall 18 and 20 to the dividing wall 32 with each upwardly projecting side or leg 38a, 38b, of the trough 38 generally spaced from the adjacent side wall 12, 14. However, it will be noted that one such leg 38a of the distillate collecting trough 38 on opposite sides of the dividing wall 32 extends upwardly and into sealing relationship with the dome top 16, and in the space between the opposed leg 38b and its adjacent wall (12 in the high pressure stage and 14 in the low pressure stage) a horizontally disposed mesh 40 is supported that permits vapor to flow therethrough substantially free of any entrained brine droplets. Thus, the upper (i.e. condenser) chamber is sealingly divided by the wall 32 and trough 38 into two separate condenser stages or chambers 34, 36, each having an individual vapor flow entry through the mesh 40 from the flash chamber therebelow.

A generally inverted V-shaped baffle member 39 is supported extending between the dividing wall 32 and the end walls 18, 20 in each chamber. The baffle 39 includes one leg 39a extending generally toward the center of the tube bundle 30 and the other leg 39b generally conforming to the outer perimeter of the tube bundle 30 on the side of the tube bundle 30 opposite the mesh 40 to establish a generally tortuous or serpentine vapor flow path through the bundle as shown by the arrows. An orifice 41 in the dividing wall 32 adjacent the apex of the baffle in the chamber 34 permits the non-condensible vapors of this chamber to be vented into the condenser of the next stage 36. A shroud member 45 adjacent the wall 20 of the lower pressure chamber 13 encloses a portion (e.g. 1% to 2%) of the condenser tube bundle 30 in this stage to define a vent condenser section. The lower portion of the shroud 45 is open to permit condensate to drip to the distillate trough 38. The baffle 39 of chamber 36 abuts the planar face 45a of the shroud member 45 and a vent orifice 47 in the face 45a generally adjacent the apex of the inverted V-shaped baffle 39 vents the non-condensible vapors of chamber 36 into the vent condenser section. An external vent 49 leads from the vent condenser section to externally of the chamber 36 and into the next lower temperature stage of the multi-stage unit.

A flash stage separating wall 44 depends vertically downwardly from the distillate trough 38 into the flash chamber and terminates a distance above the bottom 22 to define a brine entry 46 having a dam member 48 disposed downstream therefrom and supporting a shelf 50 to duplicate the brine entry opening provided on opposing walls 12 and 14. The partitioning wall 44 extends between and in sealing engagement with the opposed ends 18 and 20 of the enclosure and effectively divides the lower flash evaporator chamber into a pair of flash evaporator stages HT (high temperature) and LT (low temperature). As is seen, the vapor inlets into each condenser chamber are arranged such that each flash stage is in vapor flow communication with a separate and sealed portion of the single condenser.

Thus, as is seen, brine enters the first upstream or higher temperature HT stage flash evaporator through a flow orifice 24 which occupies the entire stage width of the housing as measured perpendicular to the direction of flow. The vapor which is flashed-off within this HT chamber flows through the mesh 40 where entrained brine droplets are removed before the vapor enters the condenser chamber 34. Vapor is condensed on the heat transfer surface of the condenser tubes to form the distillate which is collected in the distillate trough 38. Any noncondensible gases are vented to the next evaporator stage through the vent orifice 41. This sequence is essentially duplicated in the second or lower temperature stage with the vapor flowing through the mesh separator 40 associated with LT stage and enters the other portion 36 of the two stage condenser tube bundle. Any noncondensible vapors in this stage are vented into the vent condenser portion through orifice 47 and that portion of the vapors not condensed therein is ultimately externally vented to the next lower temperature stage. Thus, the design configuration according to the present invention permits the use of a single condenser tube bundle to serve, in cross-flow relationship, two flash evaporator stages. This provides a substantial reduction in the number of tube sheets, water boxes, and interconnecting piping and external venting over the "cross-flow" design yet retains the reduced heat transfer surface requirement normally associated with reduced thermal losses in such "cross-flow" design.

## Claims

1. A multi-stage flash evaporator for evaporating a solvent from a solution, comprising an elongated housing with side walls (18, 20) and divided by divider walls into a plurality of evaporation stages maintained, during operation of said evaporator at successively decreasing pressures, means for admitting said solution to the highest pressure evaporation stage and for directing said solution through evaporation stages to the lowest pressure evaporation stage thereby causing staged partial evaporation of said solvent, and condenser means associated with said evaporation stages for condensing the solvent evaporated from said solution in the various evaporation stages, characterized in that each said condenser means extends between the side walls (18, 20) and is partially arranged in the upper portion of, and between, two adjacent evaporation stages (11, 13), each said condenser means being divided by a partition (32) into two chambers (34 and 36), one chamber being in communication with one and the other chamber being in communication with the other of said two adjacent evaporation stages (11, 13) and that condenser tubes (30) extend between the side walls (18, 20) of said housing and serially through the two chambers (34, 36) and said partition (32) in a direction generally parallel to said divider walls (12, 14).

2. A flash evaporator as claimed in claim 1, characterized in that a venting means is connected to the condenser chamber section (36) in communication with the lower pressure evaporation stage 13 and said partition (32) has a vent opening (41) for venting incondensable gases from the higher pressure condensing chamber (34) to the lower pressure condensing chamber (36).

3. A flash evaporator as claimed in claim 1 or 2, characterized in that said condenser chambers are formed by wall structure (38) extending between said side walls (18, 20) in the top portion of said housing in the area between two adjacent evaporation stages (11, 13), and that said wall structure (38a) is open in one chamber (34) at one side of the condenser means (30) to provide a passage for vapor from one (11) of said adjacent evaporation stages and said wall structure (38b) is open in the other chamber (38) at the opposite side of said condenser means (30) to provide a vapor flow passage for vapor from the other (13) of said adjacent evaporation stages (11, 13).

4. A flash evaporator as claimed in claim 3, characterized in that droplet separating structures (40) are arranged in said vapor passages.

5. A flash evaporator as claimed in claims 3 or 4, characterized in that each said condenser chamber is generally U-shaped in cross-section, the bottom portion forming a condensate trough, the side walls of said U-shaped chamber extending to the top of said housing only at one side, the opposite side being open to form said vapor flow passages.

## Revendications

1. Evaporateur à détente multiétagée pour évaporer un solvant à partir d'une solution, comprenant un carter allongé avec des parois latérales (18, 20) et divisé par des parois de séparation en plusieurs étages d'évaporation maintenus à des pressions successivement décroissantes pendant le fonctionnement de l'évaporateur, des moyens pour admettre la solution dans l'étage d'évaporation à plus haute pression et pour diriger cette solution à travers les étages d'évaporation jusqu'à l'étage d'évaporation à la plus basse pression, produisant de ce fait une évaporation partielle étagée du solvant, et des moyens formant condenseurs associés à ces étages de vaporisation pour condenser le solvant évaporé de la solution dans les divers étages de vaporisation, cet évaporateur étant caractérisé en ce que chacun des moyens formant condenseurs se prolonge entre les parois latérales (18, 20) du carter et est disposé en partie dans la région supérieure comprise entre deux étages contigus (11, 13) d'évaporation, chacun de ces moyens formant condenseurs étant en outre divisé par une cloison (32) en deux chambres (34, 36) dont l'une communique avec un des deux étages contigus (11, 13) d'évaporation tandis que l'autre communique avec l'autre étage contigu d'évaporation; et en ce que les tubes (30) du condenseur se prolongent entre les parois latérales (18, 20) du carter et traversent successivement les deux chambres (34, 36) et la cloison (32) dans une direction généralement parallèle aux parois de séparation (12, 14).

2. Evaporateur à détente suivant la revendication 1, caractérisé en ce qu'un moyen d'évacuation est relié à la chambre (36) du condenseur en communication avec l'étage (13) d'évaporation basse pression; et en ce que la cloison (32) est percée d'un orifice (41) d'évacuation pour évacuer les vapeurs non condensables de la chambre (34) de condensation haute pression vers la chambre (36) de condensation basse pression.

3. Evaporateur à détente suivant l'une des revendications 1 ou 2, caractérisé en ce que les chambres du condenseur sont formées par une structure (38) qui se prolonge entre les parois latérales (18, 20) à la partie supérieure du carter dans la région comprise entre deux étages contigus (11, 13) d'évaporation; et en ce que la paroi (38b) de la structure (38) est ouverte dans une chambre (34), d'un côté du moyen (30) formant condenseur, afin de livrer passage au flot de vapeur venant de l'étage (11) d'évaporation, tandis que cette paroi (38b) de la structure (30) est ouverte dans l'autre chambre (36), du côté opposé du moyen (30) formant condenseur, afin de livrer passage au flot de vapeur venant de l'autre étage (13) d'évaporation.

4. Evaporateur à détente suivant la revendication 3, caractérisé en ce que des structures (40) de retenue des gouttelettes de saumure sont disposées dans les passages de vapeur.

5. Evaporateur à détente suivant l'une des revendications 3 ou 4, caractérisé en ce que chaque chambre du condenseur présente en coupe transversale la forme générale d'un U dont la partie inférieure constitue une auge à condensat, les parois latérales de cette chambre en U se prolongeant jusqu'à la partie supérieure du carter sur un côté seulement, le côté opposé étant ouvert pour constituer des passages du flot de vapeur.

## Patentansprüche

1. Mehrstufiger Entspannungsverdampfer zum Ausdampfen eines Lösungsmittels aus einer Lösung, mit einem länglichen Gehäuse, das Seitenwände (18, 20) aufweist und durch Trennwände in eine Mehrzahl von Verdampfungsstufen unterteilt ist, die im Betrieb des Verdampfers auf fortschreitend niedrigeren Drücken gehalten werden, weiter mit Mitteln zum Zuführen der Lösung zu der Verdampfungsstufe mit dem höchsten Druck und zum Weiterleiten der Lösung durch die einzelnen Verdampfungsstufen bis zu der Verdampfungsstufe mit dem niedrigsten Druck, wodurch eine stufenweise Teilverdampfung des Lösungsmittels herbeigeführt wird, und mit den Verdampfungsstufen zugeordneten Kondensationseinrichtungen zum Kondensieren des in den einzelnen Verdampfungsstufen aus der Lösung ausgedampften Lösungsmittels, dadurch gekennzeichnet, daß die genannten Kondensationseinrichtungen jeweils zwischen den Seitenwänden (18, 20) verlaufen und teilweise im oberen Teil und zwischen zwei jeweils benachbarten Verdampfungsstufen (11, 13) angeordnet sind, daß weiter die Kondensationseinrichtungen jeweils durch eine Zwischenwand (32) in zwei Kammern (34 und 36) unterteilt sind, von denen die eine Kammer mit der einen und die andere Kammer mit der anderen der beiden benachbarten Verdampfungsstufen (11, 13) in Verbindung steht, und daß Kondensatorrohre (30) zwischen den Seitenwänden (18, 20) des Gehäuses und seriell durch die beiden Kammern (34, 36) und die Zwischenwand (32) hindurch in zu den Gehäusetrennwänden (12, 14) im wesentlichen paralleler Richtung verlaufen.

2. Entspannungsverdampfer nach Anspruch 1, dadurch gekennzeichnet, daß eine Entlüfteeinrichtung mit derjenigen Kondensationskammer (36) verbunden ist, die mit der Verdampfungsstufe (13) mit dem niedrigeren Druck in Verbindung steht, und daß die Zwischenwand (32) eine Entlüfteöffnung (41) zum Entlüften nicht kondensierbarer Gase aus der Kondensationskammer (34) mit dem höheren Druck in die Kondensationskammer (36) mit dem niedrigeren Druck aufweist.

3. Entspannungsverdampfer nach Anspruch 1 oder 2, dadurch gekennzeichnet, daß die Kondensationskammern durch eine zwischen den Seitenwänden (18, 20) im oberen Teil des Gehäuses im Bereich zwischen zwei benachbarten Verdampfungsstufen (11, 13) verlaufende Wandkonstruktion (38) gebildet sind, und daß diese Wandkonstruktion (38a) in der einen Kammer (34) auf der einen Seite der Kondensationseinrichtung (30) offen ist, um einen Strömungsweg für Dampf aus der einen (11) der benachbarten Verdampfungsstufen zu bilden, und daß die Wandkonstruktion (38b) in der anderen Kammer (36) auf der entgegengesetzten Seite der Kondensationseinrichtung (30) offen ist, um einen Dampfströmungsweg für Dampf aus der anderen (13) benachbarten Verdampfungsstufen (11, 13) zu bilden.

4. Entspannungsverdampfer nach Anspruch 3, dadurch gekennzeichnet, daß in den Dampfströmungswegen Tropfenabscheider (40) angeordnet sind.

5. Entspannungsverdampfer nach Anspruch 3 oder 4, dadurch gekennzeichnet, daß jede Kondensationskammer einen etwa U-förmigen Querschnitt hat, wobei der Bodenteil eine Kondensatrinne bildet, und wobei von den Seitenwänden dieser U-förmigen Kammer nur die der einen Seite bis zur Gehäusedeckwand ragt, während die der anderen Seite zur Bildung der genannten Dampfströmungswege offen ist.

FIG. I

0012256

FIG. 2

FIG. 3

FIG. 4